# EUROPEAN PATENT APPLICATION

(11) **EP 4 560 971 A1**
(43) Date of publication of application: **28.05.2025**
(21) Application number: 24212123.4
(22) Date of filing: 11.11.2024
(51) Int. Cl.: H04L 9/08, H04W 12/04, H04W 12/71, H04L 41/0895, G06N 3/00

(54) **DATA COMMUNICATION WITH NETWORK SLICES THAT DELIVER QUANTUM CAPABILITIES**

(30) Priority: 27.11.2023 US 202318520074
(71) Applicant: T-Mobile Innovations LLC, Bellevue, WA 98006 (US)
(72) Inventor: PACZKOWSKI, Lyle Walter, Overland Park, 66251 (US); BALMAKHTAR, Marouane, Overland Park, 66251 (US)
(74) Representative: Suddaby, Mark Edward

(57) **Abstract**

A data communication system delivers quantum capabilities over network slices. The data communication system receives a user application characteristic from a user communication device for a user application in the user communication device. The data communication system selects one of the quantum capabilities based on the user application characteristic. The data communication system connects the user communication device to the selected one of the quantum capabilities over one of the network slices.

## Description

### TECHNICAL BACKGROUND

Wireless communication networks provide wireless data services to wireless communication devices like phones, computers, and other user devices. The wireless data services may include internet-access, data messaging, video conferencing, or some other data communication product. The wireless communication networks comprise wireless access nodes like Wireless Fidelity (WIFI) hotspots, Fifth Generation New Radio (5GNR) cell towers, and satellites in earth orbit. The wireless communication networks also comprise wireless network slices. The wireless network slices have customized software that is tailored for their specific wireless data services. For example, an augmented reality device may use an Ultra-Reliable Low Latency Communication (URLLC) slice while a television device may use an enhanced Mobile Broadband (eMBB) slice.

The typical wireless network slice comprises software that executes in a data center to form Virtual Network Functions (VNFs) that transfer user data and/or control the transfer of the user data. Exemplary VNFs that are used to form wireless network slices include User Plane Functions (UPFs) and Policy Control Functions (PCFs). Exemplary data centers include Network Function Virtualization Infrastructures (NFVIs) and Management and Orchestration (MANO) systems. MANO systems control the NFVIs to launch and connect the VNFs that form the network slices.

Artificial Intelligence (AI) networks implement brain-like intelligence in computer and communication circuitry. AI networks often use neural networks that comprise AI nodes that are connected by AI edges. The AI nodes mimic brain neurons by processing data inputs based on training data to produce weighted data outputs. AI networks are adept at pattern recognition like image processing and planning like predicting future needs.

Quantum capabilities utilize quantum mechanics to perform tasks like computing and communications. Quantum computing and quantum communications use the quantum properties of qubits which are typically photons. The photons are encoded with quantum states and transferred. The encoded photons may be used for quantum cryptography which securely transfers encoded information using the quantum states. The encoded photons may be used for quantum key distribution that generates secret cryptography keys at different locations using the quantum states. Through the entanglement of photons, the inspection of one photon at a location is immediately observable by inspecting another entangled photon at a different location. This quantum entanglement property is used for quantum intercept detection - the determination that a photon at another location has been improperly inspected by observing its entangled partner. In addition, quantum computers use qubits to encode and process information like the binary bits that are processed by a conventional computer. Thus, quantum computers use the quantum states of photons to represent and process information while conventional computers use the electromagnetic states of circuitry to represent and process information. Quantum sensors offer high precision measurement of physical infrastructures. Quantum communication networks enable extremely stringent low-latency communications.

Unfortunately, the wireless communication networks do not effectively deliver quantum capabilities over wireless network slices. Moreover, the wireless communication networks fail to efficiently orchestrate the quantum capabilities into the wireless network slices. As a result, the delivery of data communications using quantum capabilities is inhibited, and the benefits of quantum-based computing and communications are denied to the wireless network users.

### TECHNICAL OVERVIEW

In some examples, a data communication system delivers quantum capabilities over network slices. The data communication system receives a user application characteristic from a user communication device for a user application in the user communication device. The data communication system selects one of the quantum capabilities based on the user application characteristic. The data communication system connects the user communication device to the selected one of the quantum capabilities over one of the network slices.

In some examples, a data communication system delivers quantum capabilities over network slices. A network controller in the data communication system selects one of the network slices. The network controller indicates the selected one of the network slices and a user application characteristic to an Artificial Intelligence (AI) network. The network controller receives an indication of a selected one of the quantum capabilities from the AI network. The network controller instantiates the selected one of the quantum capabilities into the selected one of the network slices. The selected one of the network slices connects the user communication device to the selected one of the quantum capabilities.

In some examples, a data communication system orchestrates quantum capabilities into network slices. The data communication system receives a user application characteristic from a user communication device for a user application in the user communication device. The data communication system selects one of the quantum capabilities based on the user application characteristic. The data communication system orchestrates the selected one of the quantum capabilities into one of the network slices. The data communication system connects the user communication device to the selected one of the quantum capabilities over the one of the network slices.

### DESCRIPTION OF THE DRAWINGS

Figure 1 illustrates an exemplary data communication system to deliver quantum capabilities over network slices.
Figure 2 illustrates an exemplary operation of the data communication system to deliver the quantum capabilities over the network slices.
Figure 3 illustrates an exemplary operation of the data communication system to deliver the quantum capabilities over the network slices.
Figure 4 illustrates exemplary processing circuitry to deliver quantum capabilities over network slices.
Figure 5 illustrates an exemplary wireless communication network to orchestrate virtual quantum functions into wireless network slices.
Figure 6 illustrates an exemplary User Equipment (UE) in the wireless communication network that orchestrates the virtual quantum functions into the wireless network slices.
Figure 7 illustrates an exemplary Fifth Generation New Radio Access Node (5GNR AN) access node in the wireless communication network that orchestrates the virtual quantum functions into the wireless network slices.
Figure 8 illustrates an exemplary Wireless Fidelity Access Node (WIFI AN) in the wireless communication network that orchestrates the virtual quantum functions into the wireless network slices.
Figure 9 illustrates an exemplary Satellite Access Node (SAT AN) and Satellite Ground Station (GND) in the wireless communication network that orchestrates the virtual quantum functions into the wireless network slices.
Figure 10 illustrates an exemplary Network Function Virtualization Infrastructure (NFVI) in the wireless communication network that orchestrates the virtual quantum functions into the wireless network slices.
Figure 11 illustrates an exemplary Management and Orchestration (MANO) system in the wireless communication network that orchestrates the virtual quantum functions into the wireless network slices.
Figure 12 illustrates an exemplary Artificial Intelligence Function (AIF) in the wireless communication network that orchestrates the virtual quantum functions into the wireless network slices.
Figure 13 illustrates exemplary quantum components in the NFVI in the wireless communication network that orchestrates the virtual quantum functions into the wireless network slices.
Figure 14 illustrates an exemplary operation of the wireless communication network to orchestrate the virtual quantum functions into the wireless network slices.

### DETAILED DESCRIPTION

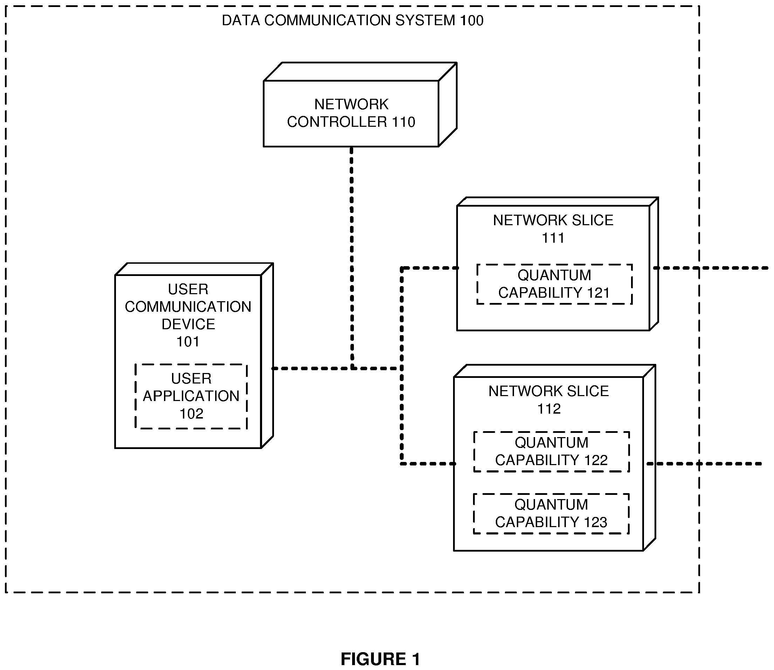

Figure 1 illustrates exemplary data communication system 100 to deliver quantum capabilities 121-123 over network slices 111-112. Data communication system 100 comprises user communication device 101, network controller 110, and network slices 111-112. User communication device 101 comprises user application 102. Network slice 111 comprises quantum capability 121. Network slice 112 comprises quantum capabilities 122-123. User communication device 101 comprises a phone, computer, vehicle, sensor, or some other data communication apparatus. Network controller 110 comprises one or more network elements that control the handling of user data for user application 102. Network slices 111-112 comprise network elements that handle user data for user application 102 or that control the handling of the user data for user application 102. The amount of wireless communication devices, network controllers, user applications, network slices, and quantum capabilities that are shown on Figure 1 has been restricted for clarity.

In some examples, network controller 110 receives a user application characteristic from user communication device 101 for user application 102. The user application characteristic comprises an identifier, service, feature, or some other information related to user application 102 and/or user communication device 101. Network controller 110 selects one of quantum capabilities 121-123 based on the user application characteristic. The quantum capability selection may be based on the quantum functionality of user application 102 or user communication device 101. For example, network controller 110 may select quantum capability 121 because user application 102 has a quantum computing feature and quantum capability 121 comprises hosted quantum computing. In another example, network controller 110 might select quantum capabilities 122-123 because user communication device 101 provides quantum cryptography and quantum intercept detection and quantum capabilities 122-123 comprise quantum cryptography and quantum intercept detection. Data communication system 100 connects user communication device 101 to the selected one of quantum capabilities 121-123 over one of network slices 111-112.

Quantum capabilities 121-123 comprise quantum key distribution, quantum key cryptography, hosted quantum computing, quantum intercept detection, quantum sensors, quantum communication networks, or some other type of quantum functionality. Quantum capabilities 121-123 utilize quantum mechanics to perform tasks like computing and communications. Quantum computing and quantum communications use the quantum properties of qubits which are typically photons. The photons are encoded with quantum states and transferred. The encoded photons may be used for quantum cryptography which securely transfers encoded information using the quantum states. The encoded photons may be used for quantum key distribution that generates secret cryptography keys at different locations using the quantum states. Through the entanglement of photons, the inspection of one photon at a location is immediately observable by inspecting another entangled photon at a different location. This quantum entanglement property is used for quantum intercept detection - the determination that a photon at another location has been improperly inspected by observing its entangled partner. In addition, quantum computers use qubits to encode and process information like the binary bits that are processed by a conventional computer. Thus, quantum computers use the quantum states of photons to represent and process information while conventional computers use the electromagnetic states of circuitry to represent and process information.

In some examples, network slices 111-112 comprise Virtual Network Functions (VNFs) in a Network Function Virtualization Infrastructure (NFVI). Quantum capabilities 121-123 may comprise Virtual Quantum Functions (VQFs) in the NFVI. Network controller 110 may orchestrate selected quantum capabilities 121-123 into network slices 111-112. Network slices 111-112 have customized software that is tailored for their specific data services. For example, an augmented reality device may use an Ultra-Reliable Low Latency Communication (URLLC) slice, while a television device may use an enhanced Mobile Broadband (eMBB) slice. The typical wireless network slice comprises software that executes in a data center to form the VNFs that transfer user data and/or control the transfer of the user data. Exemplary VNFs that are used to form wireless network slices include User Plane Functions (UPFs) and Policy Control Functions (PCFs). Exemplary data centers include NFVIs and Management and Orchestration (MANO) systems. The MANO systems control the NFVIs to launch and connect the VNFs that form the network slices.

In some examples, network controller 110 uses an Artificial Intelligence (AI) network to select quantum capabilities 121-123 based on one or more user application characteristics. The AI network may call an Application Programming Interface (API) on a network orchestrator which then instantiates selected quantum capabilities 121-123 into network slices 111-112 in response to the API call. Alternatively, network controller 110 may receive an indication of the selected one of quantum capabilities 121-123 from the AI network and call an API on a network orchestrator which then instantiates selected quantum capabilities 121-123 into network slices 111-112 in response to the API call. AI networks implement brain-like intelligence in computer and communication circuitry. AI networks often use neural networks that comprise AI nodes that are connected by AI edges. The AI nodes mimic brain neurons by processing data inputs based on training data to produce weighted data outputs. AI networks are adept at pattern recognition like image processing and planning like predicting future needs.

User communication device 101 and data communication system 100 may comprise radios that wirelessly communicate using wireless protocols like Wireless Fidelity (WIFI), Fifth Generation New Radio (5GNR), Long Term Evolution (LTE), Low-Power Wide Area Network (LP-WAN), Near-Field Communications (NFC), Code Division Multiple Access (CDMA), Frequency Division Multiple Access (FDMA), Time Division Multiple Access (TDMA), and satellite data communications. User communication device 101, network controller 110, and wireless network slices 111-112 comprise microprocessors, software, memories, transceivers, bus circuitry, and/or some other data processing components. The microprocessors comprise Digital Signal Processors (DSP), Central Processing Units (CPU), Graphical Processing Units (GPU), Application-Specific Integrated Circuits (ASIC), and/or some other data processing hardware. The memories comprise Random Access Memory (RAM), flash circuitry, disk drives, and/or some other type of data storage. The memories store software like operating systems, utilities, protocols, applications, and functions. The microprocessors retrieve the software from the memories and execute the software to drive the operation of data communication system 100 as described herein.

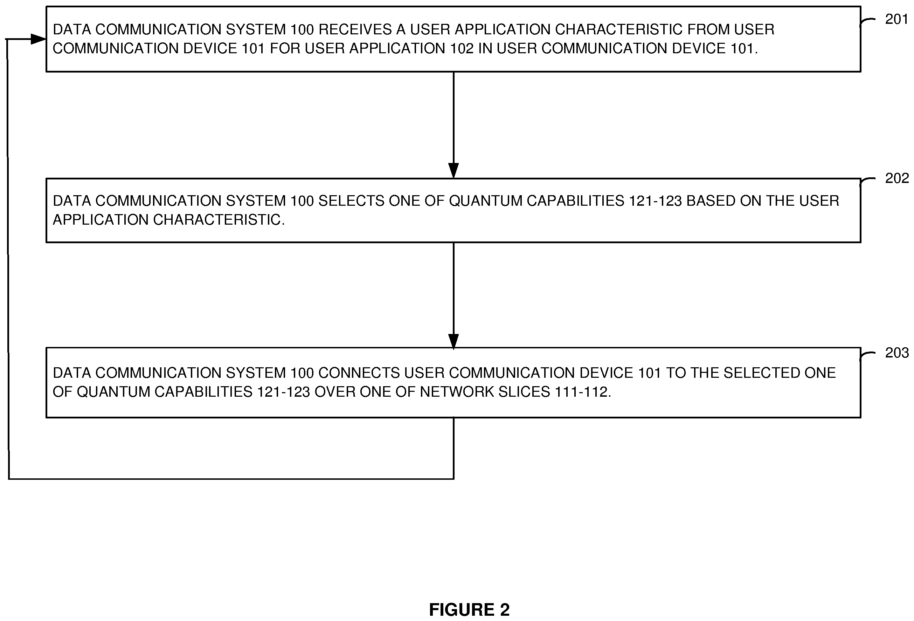

Figure 2 illustrates an exemplary operation of data communication system 100 to deliver quantum capabilities 121-123 over network slices 111-112. The operation may differ in other examples. Network controller 110 receives a user application characteristic from user communication device 101 for user application 102 (201). Network controller 110 selects one of quantum capabilities 121-123 based on the user application characteristic (202). Data communication system 100 connects user communication device 101 to the selected one of quantum capabilities 121-123 over one of network slices 111-112 (203).

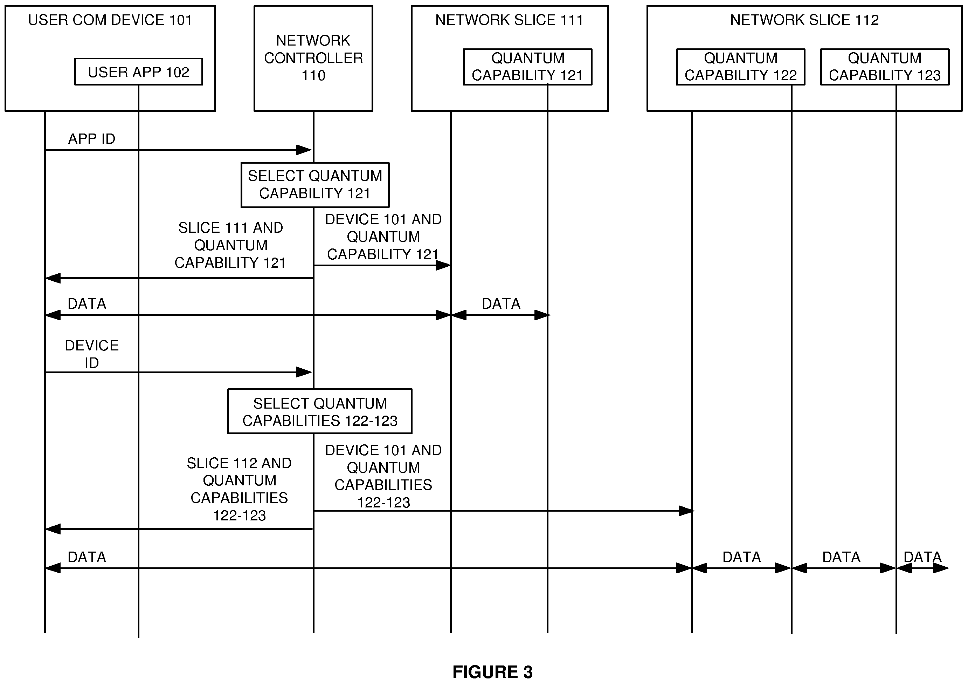

Figure 3 illustrates an exemplary operation of data communication system 100 to deliver quantum capabilities 121-123 over network slices 111-112. The operation may differ in other examples. User communication device 101 transfers an application identifier (APP ID) for user application (APP) 102 to network controller 110. Network controller 110 selects quantum capability 121 based on the application identifier. Network controller 110 indicates user communication device 101 and quantum capability 121 to network slice 111. Network controller 110 indicates network slice 111 and quantum capability 121 to user communication device 101. User communication device 101 exchanges data with quantum capability 121 over network slice 111. Quantum capability 121 serves user communication device 101 and user application 102 over network slice 111.

Subsequently, user communication device 101 transfers a device identifier (ID) for user communication device 101 to network controller 110. Network controller 110 selects quantum capabilities 122-123 based on the device identifier. Network controller 110 indicates user communication device 101 and quantum capabilities 122-123 to network slice 112. Network controller 110 indicates network slice 112 and quantum capabilities 122-123 to user communication device 101. User communication device 101 exchanges data with quantum capabilities 122-123 over network slice 112. Quantum capabilities 122-123 serve user communication device 101 and user application 102 over network slice 112.

Advantageously, data communication system 100 effectively delivers quantum capabilities 121-123 over network slices 111-112. Moreover, data communication system 100 may efficiently orchestrate the quantum capabilities 121-123 into network slices 111-112. As a result, the delivery of data communications using quantum capabilities 121-123 is improved, and the benefits of quantum-based computing and communications are provided to system users.

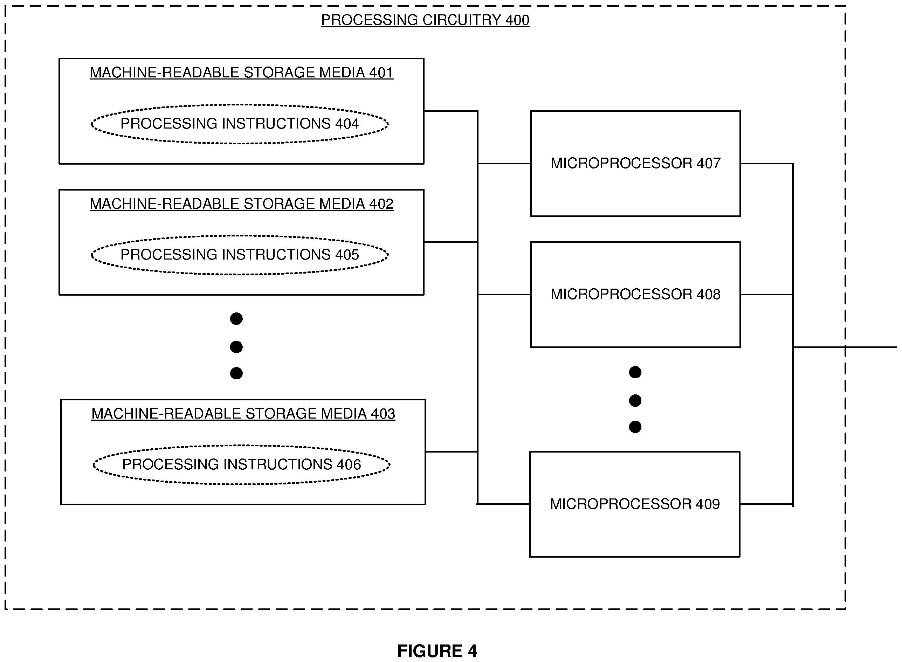

Figure 4 illustrates exemplary processing circuitry 400 to deliver quantum capabilities over network slices. Processing circuitry 400 comprises an example of user communication device 101, network controller 110, and network slices 111-112, although device 101, controller 110, and slices 111-112 may differ. Processing circuitry 400 comprises machine-readable storage media 401-403 and microprocessors 407-409 that are communicatively coupled. Machine-readable storage media 401-403 store processing instructions 404-406 in a non-transitory manner. Microprocessors 407-409 comprise DSPs, CPUs, GPUs, ASICs, and/or some other data processing hardware. Machine-readable storage media 401-403 comprises RAM, flash circuitry, disk drives, and/or some other type of data storage apparatus. Microprocessors 407-409 retrieve processing instructions 404-406 from non-transitory machine-readable storage media 401-403. Microprocessors 407-409 execute processing instructions 404-406 to deliver quantum capabilities over network slices as described above for data communication system 100 and as described below for wireless communication network 500. The amount of storage media, microprocessors, processing instructions that are shown in Figure 4 may vary in other examples.

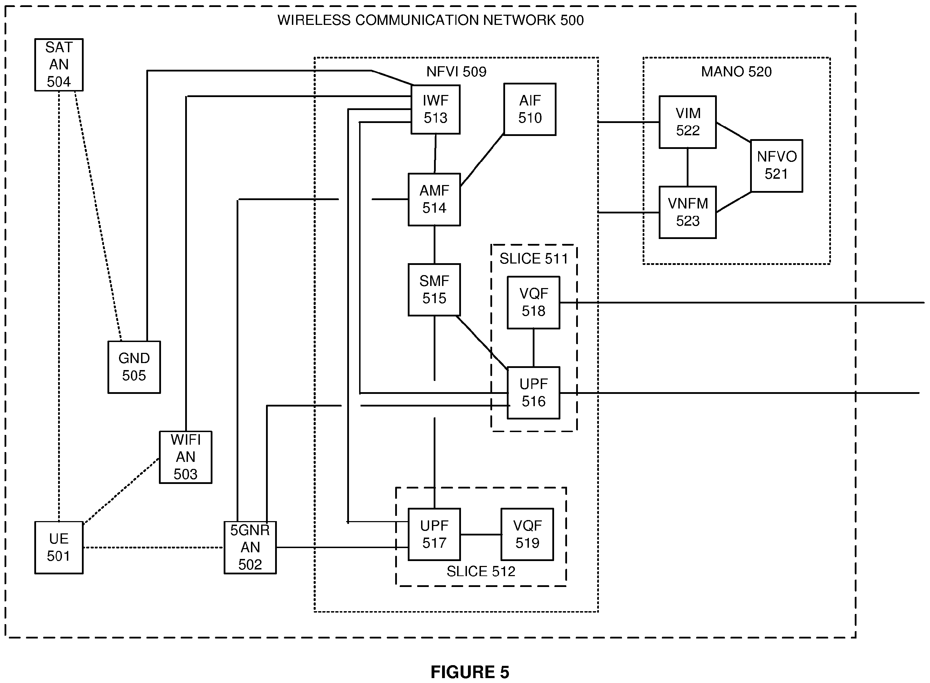

Figure 5 illustrates exemplary wireless communication network 500 to orchestrate Virtual Quantum Functions (VQFs) 518-519 for wireless network slices 511-512. Wireless communication network 500 comprises an example of data communication system 100 and processing circuitry 400, although system 100 and circuitry 400 may differ. Wireless communication network 500 comprises User Equipment (UE) 501, Fifth Generation New Radio Access Node (5GNR AN) 502, Wireless Fidelity Access Node (WIFI AN) 503, Satellite Access Node (SAT AN) 504, Satellite Ground Station (GND) 505, Network Function Virtualization Infrastructure (NFVI) 509, and Management and Orchestration (MANO) 520. NFVI 509 comprises Artificial Intelligence Function (AIF) 510, wireless network slices 511-512, Interworking Function (IWF) 513, Access and Mobility Management Function (AMF) 514, and Session Management Function (SMF) 515. Wireless network slice 511 comprises User Plane Function (UPF) 516 and VQF 518. Wireless network slice 512 comprises UPF 517 and VQF 519. MANO 520 comprises Network Function Virtualization Orchestrator (NFVO) 521, Virtual Infrastructure Manager (VIM) 522, and Virtual Network Function Manager (VNFM) 523.

AIF 510 selects individual VQFs 518-519 for orchestration into individual wireless network slices 511-512 based on user application characteristics like device ID and user application ID. VQF 518 serves Quantum Key Distribution (QKD) to slice 511 to deliver secure internet communications to user devices like UE 501. VQF 518 implements and/or manages QKD protocols within slice 511 of network 500, and since to ensure secure internet QKD protocols could vary among different UEs, VQF 518 uses a compatible QKD protocol for UE 501. VQF 519 serves hosted quantum computing to slice 512 for user devices like UE 501.

Although restricted for clarity, additional VQFs could be included in wireless communication network 500. The additional VQFS may comprise VQFs for quantum cryptography, quantum intercept detection, quantum sensing, quantum communication networks, and/or some other quantum functionality. Quantum cryptography uses encoded qubit properties to securely transfer user data. Quantum intercept detection uses quantum entanglement to detect the improper inspection of remote qubits. Quantum sensors that offer high precision measurement could monitor and manage wireless network slices. For example, quantum sensors could detect characteristics of NFVI 509 and exert physical infrastructure control to support wireless network slices. Quantum communication networks enable extremely stringent low-latency communications for wireless network slices that require real-time responsiveness.

AIF 510, AMF 514, SMF 515, and MANO 520 comprise an example of network controller 110, although network controller 110 may differ. Wireless network slices 511-512 comprise an example of slices 111-112 , although slices 111-112 may differ. VQFs 518-519 comprise examples of quantum capabilities 121-123, although quantum capabilities 121-123 may differ. UE 501 communicates with NFVI 509 over 5GNR AN 502, WIFI AN 503, and/or SAT AN 504/GND 505. In the following example, 5GNR AN 502 is used for communication between UE 501 and NFVI 509, although WIFI AN 503, and/or SAT AN 504/GND 505 could be used in a like manner in other examples.

UE 501 transfers a device Identifier (ID), user application ID, and slice capabilities to AMF 514 over 5GNR AN 502. The device ID is for UE 501. The user application ID is for a quantum user application in UE 501. The slice capabilities describe slice features that are suitable for UE 501 and the quantum user application. AMF 514 selects slice IDs for slices 511-512 based on these slice capabilities. Slice 511 is selected to provide secure data exchange over the internet base in the device ID and the slice capabilities. Slice 512 is selected to provide hosting quantum computing based on the quantum user application ID and the slice capabilities.

AMF 514 transfers the device ID, user application ID, and selected slice IDs to AIF 510. AIF 510 selects VQF 518 to provide Quantum Key Distribution (QKD) to UE 501 over slice 511 based on the device ID, user application ID, and selected slice ID. AIF 510 selects VQF 519 to provide hosted quantum computing the quantum user application in UE 501 over slice 512 based on the device ID, user application ID, and selected slice ID. In some examples AIF 510 calls an Application Programming Interface (API) on NFVO 521 to instantiate VQF 518 into slice 511 and to instantiate VQF 519 into slice 512. In this example, AIF 510 signals AMF 514 to drive the instantiation of VQF 518 into slice 511 and to instantiate VQF 519 into slice 512.

AIF 510 indicates VQF 518 for slice 511 to AMF 514. AIF 510 also indicates VQF 519 for slice 512 to AMF 514. AMF 514 interacts with SMF 515 to develop context that includes the selection of UPF 516 for slice 511 and the selection of UPF 517 for slice 512. SMF 515 transfers this context to NFVO 522 over VNFM 523 - perhaps in an API call - and NFVO 521 responsively directs VIM 522 to instantiate VQF 518 into slice 511 and to instantiate VQF 519 into slice 512. VIM 522 configures NFVI 509 to execute and connect UPF 516 and VQF 518 in slice 511. VIM 522 configures NFVI 509 to execute and connect UPF 517 and VQF 519 in slice 512. VIM 522 indicates to NFVO 521 that VQFs 518-519 are ready for slices 511-512. Over VNFM 523, NFVO 521 indicates to SMF 515 that VQFs 518-519 are ready for slices 511-512, and SMF 515 indicates to AMF 514 that VQFs 518-519 are ready for slices 511-512. AMF 514 then transfers context for slices 511-512 to 5GNR AN 502. AMF 514 transfers context for slices 511-512 to UE 501 over 5GNR AN 502. SMF 515 transfers context for slice 511 to UPF 516 and transfers context for slice 512 to UPF 517.

UE 501 transfers a destination address for secure internet communication to VQF 518 over 5GNR AN 502 and UPF 516. VQF 518 exchanges qubits with the destination to establish quantum cryptography keys. VQF 518 indicates the quantum cryptography keys to UPF 516. UE 501 exchanges user data with the destination over 5GNR AN 502 and UPF 516. UE 501 and UPF 516 use secret network keys to encrypt/decrypt the user data transferred over 5GNR AN 502. UPF 516 uses the quantum cryptography keys to encrypt/decrypt the user data exchanged with the destination over the internet.

UE 501 executes the quantum user application. The quantum user application exchanges user data with VQF 519 over 5GNR AN 502 and UPF 517. UE 501 and UPF 517 may use secret network keys to encrypt/decrypt this user data transferred over 5GNR AN 502. VQF 519 delivers a hosted quantum computing service to the quantum user application over this data exchange. For example, the quantum user application in UE 501 may submit quantum computing tasks to VQF 519 which performs the tasks and transfers the quantum computing results to the quantum user application in UE 501.

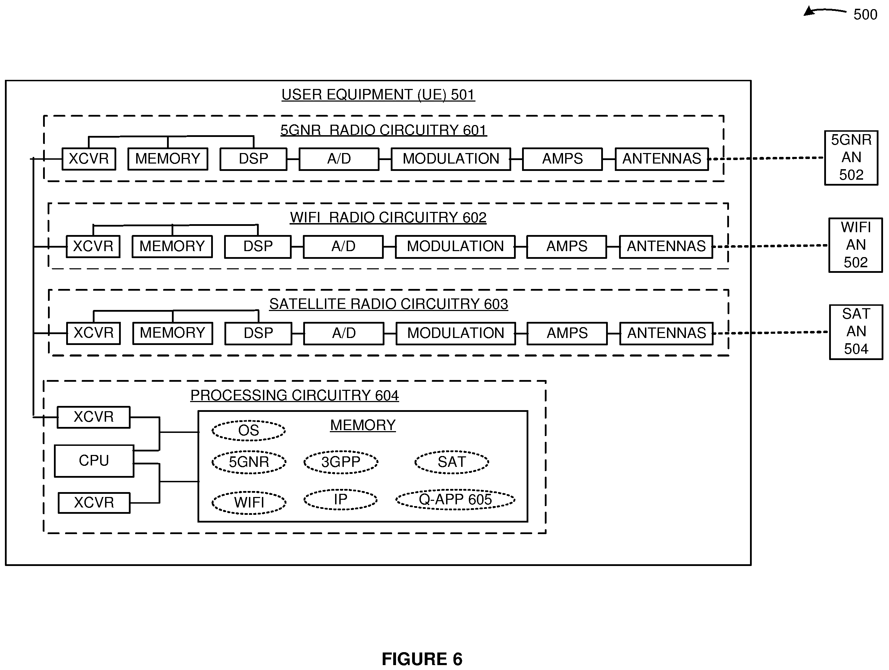

Figure 6 illustrates an exemplary UE 501 in wireless communication network 500 that orchestrates VQFs 518-519 into wireless network slices 511-512. UE 501 comprises an example of user communication device 101, although device 101 may differ. UE 501 comprises Fifth Generation New Radio (5GNR) radio circuitry 601, Wireless Fidelity (WIFI) radio circuitry 602, satellite radio circuitry 603, and processing circuitry 604. Radio circuitry 601-603 comprises antennas, amplifiers, filters, modulation, analog-to-digital interfaces, DSPs, memories, and transceivers (XCVRs) that are coupled over bus circuitry. Processing circuitry 604 comprises one or more CPUs, one or more memories, and one or more transceivers that are coupled over bus circuitry. The one or more memories in processing circuitry 604 store software like an Operating System (OS), 5GNR Application (5GNR), 3GPP Application (3GPP), WIFI Application (WIFI), Satellite Application (SAT), Internet Protocol application (IP), and Quantum User Application (Q-APP) 605. The antennas in radio circuitry 601-603 exchange wireless signals with ANs 502-504. Transceivers in radio circuitry 601-603 are coupled to transceivers in processing circuitry 604. In processing circuitry 604, the one or more CPUs retrieve the software from the one or more memories and execute the software to direct the operation of UE 501 as described herein. For example, a CPU may execute Q-APP 605 to access the hosted quantum computing service from VQF 519 over slice 512.

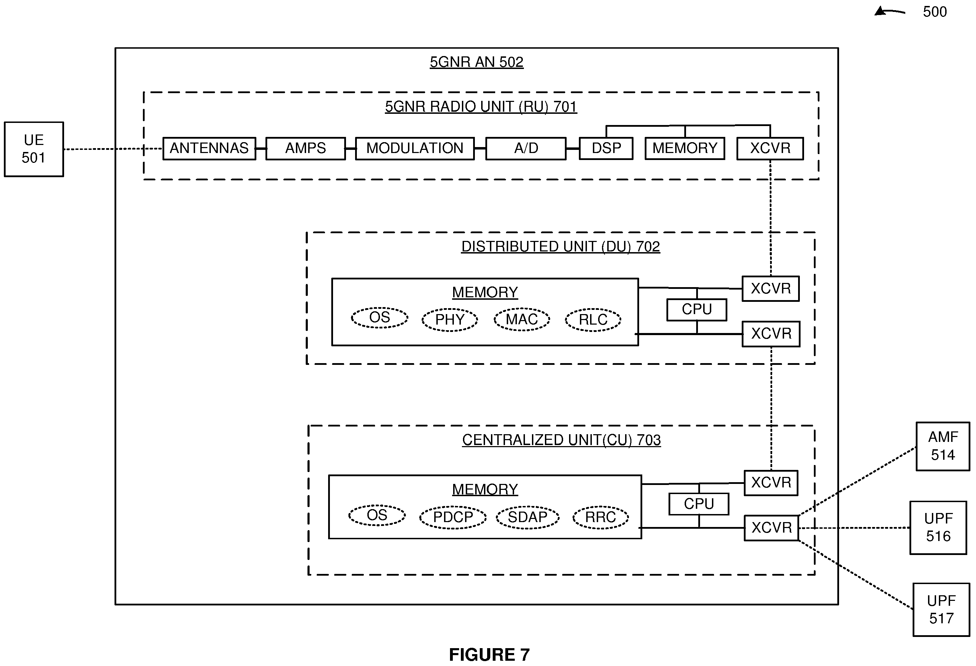

Figure 7 illustrates an exemplary Fifth Generation New Radio Access Node (5GNR AN) in wireless communication network 500 that orchestrates VQFs 518-519 into wireless network slices 511-512. 5GNR AN 502 comprises an example of data communication system 100 and processing circuitry 400, although system 100 and circuitry 400 may differ. 5GNR AN 502 comprises 5GNR Radio Unit (RU) 701, Distributed Unit (DU) 702, and Centralized Unit (CU) 703. 5GNR RU 701 comprises antennas, amplifiers, filters, modulation, analog-to-digital interfaces, DSP, memory, radio applications, and transceivers that are coupled over bus circuitry. DU 702 comprises memory, CPU, user interfaces and components, and transceivers that are coupled over bus circuitry. The memory in DU 702 stores operating system and 5GNR network applications for Physical Layer (PHY), Media Access Control (MAC), and Radio Link Control (RLC). CU 703 comprises memory, CPU, and transceivers that are coupled over bus circuitry. The memory in CU 703 stores an operating system and 5GNR network applications for Packet Data Convergence Protocol (PDCP), Service Data Adaption Protocol (SDAP), and Radio Resource Control (RRC). The antennas in 5GNR RU 701 are wirelessly coupled to UE 501 over 5GNR links. Transceivers in 5GNR RU 701 are coupled to transceivers in DU 702. Transceivers in DU 702 are coupled to transceivers in CU 703. Transceivers in CU 703 are coupled to AMF 514 and UPFs 516-517. The DSP and CPU in RU 701, DU 702, and CU 703 execute the radio applications, operating systems, and network applications to exchange data and signaling with UE 501, AMF 514, and UPFs 516-517 as described herein.

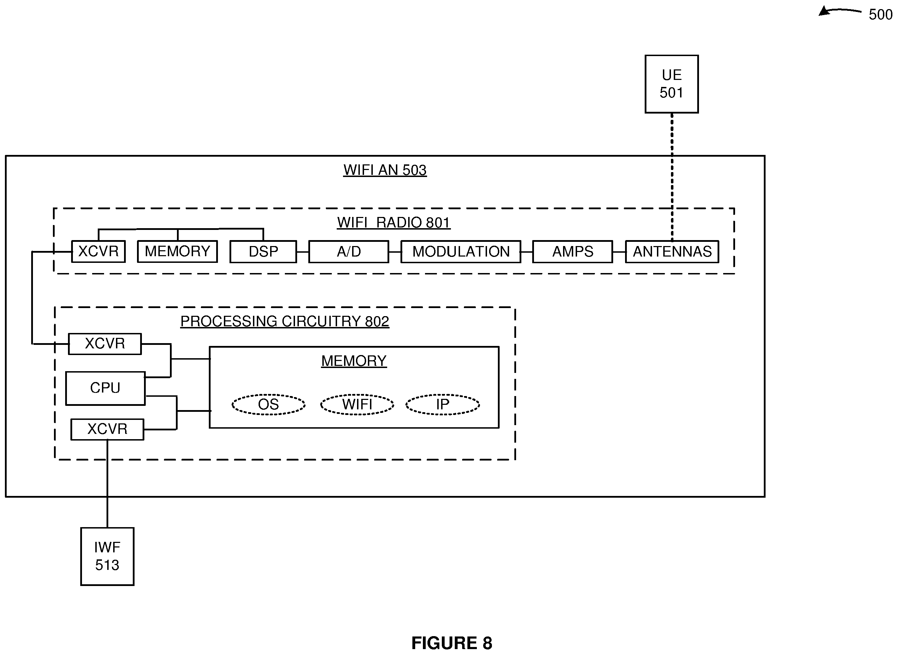

Figure 8 illustrates an exemplary Wireless Fidelity Access Node (WIFI AN) 503 in wireless communication network 500 that orchestrates VQFs 518-519 into wireless network slices 511-512. WIFI AN 503 comprises an example of data communication system 100 and processing circuitry 400, although system 100 and circuitry 400 may differ. WIFI AN 503 comprises WIFI radio 801 and processing circuitry 802. Radio 801 comprises antennas, amplifiers, filters, modulation, analog-to-digital interfaces, DSPs, memories, and transceivers that are coupled over bus circuitry. Processing circuitry 802 comprises one or more CPUs, one or more memories, and one or more transceivers that are coupled over bus circuitry. The one or more memories in processing circuitry 802 store software like an Operating System (OS), WIFI application (WIFI), and IP application (IP). The antennas in WIFI radio 801 exchange WIFI signals with UE 501. Transceivers in radio 801 are coupled to transceivers in processing circuitry 802. Transceivers in processing circuitry 802 are coupled to transceivers in IWF 513. In processing circuitry 802, the one or more CPUs retrieve the software from the one or more memories and execute the software to direct the operation of WIFI AN 503 as described herein.

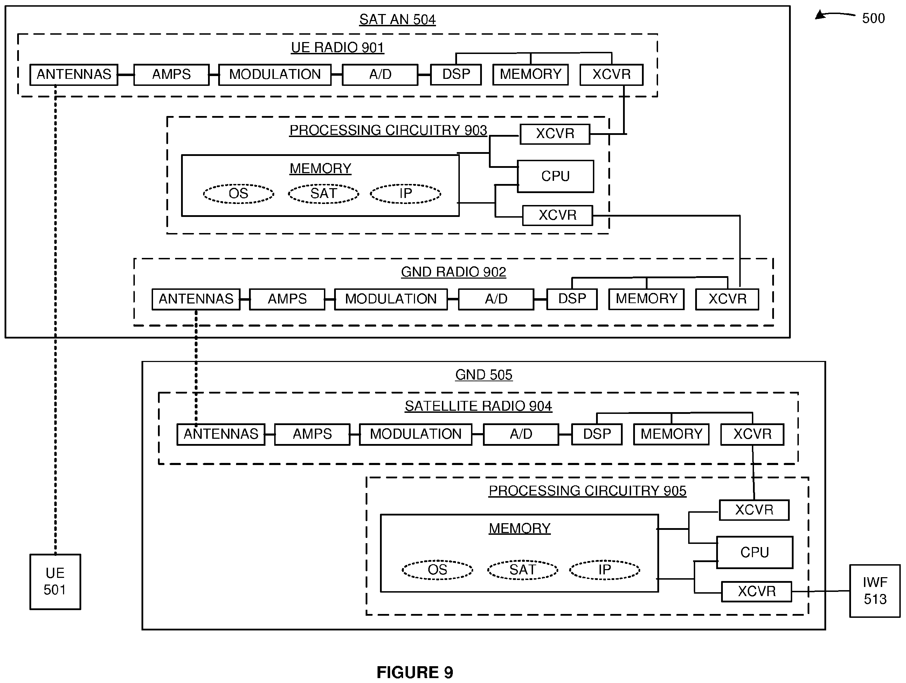

Figure 9 illustrates exemplary Satellite Access Node (SAT AN) 504 and Satellite Ground Station (GND) 505 in wireless communication network 500 that orchestrates VQFs 518-519 for wireless network slices 511-519. SAT AN 504 and GND 505 comprise an example of data communication system 100 and processing circuitry 400, although system 100 and circuitry 400 may differ. SAT AN 504 comprises UE radio 901, GND radio 902 and processing circuitry 903. GND 505 comprises satellite radio 904 and processing circuitry 905. Radios 901-902 and 904 comprise antennas, amplifiers, filters, modulation, analog-to-digital interfaces, DSPs, memories, and transceivers that are coupled over bus circuitry. Processing circuitry 903 and 905 comprise one or more CPUs, one or more memories, and one or more transceivers that are coupled over bus circuitry. The one or more memories in processing circuitry 903 and 905 store software like an Operating System (OS), Satellite Application (SAT), and IP application (IP). The antennas in UE radio 901 exchange satellite signals with UE 501. Transceivers in UE radio 901 are coupled to transceivers in processing circuitry 903. Transceivers in processing circuitry 903 are coupled to transceivers in GND radio 902. The antennas in GND radio 902 exchange satellite signals with GND 505, and the antennas in satellite radio 904 exchange the satellite signals with GND radio 902. Transceivers in satellite radio 904 are coupled to transceivers in processing circuitry 905. Transceivers in processing circuitry 905 are coupled to transceivers in IWF 513. In processing circuitry 903 and 905, the one or more CPUs retrieve the software from the one or more memories and execute the software to direct the operation of SAT AN 504 and GND 505 as described herein.

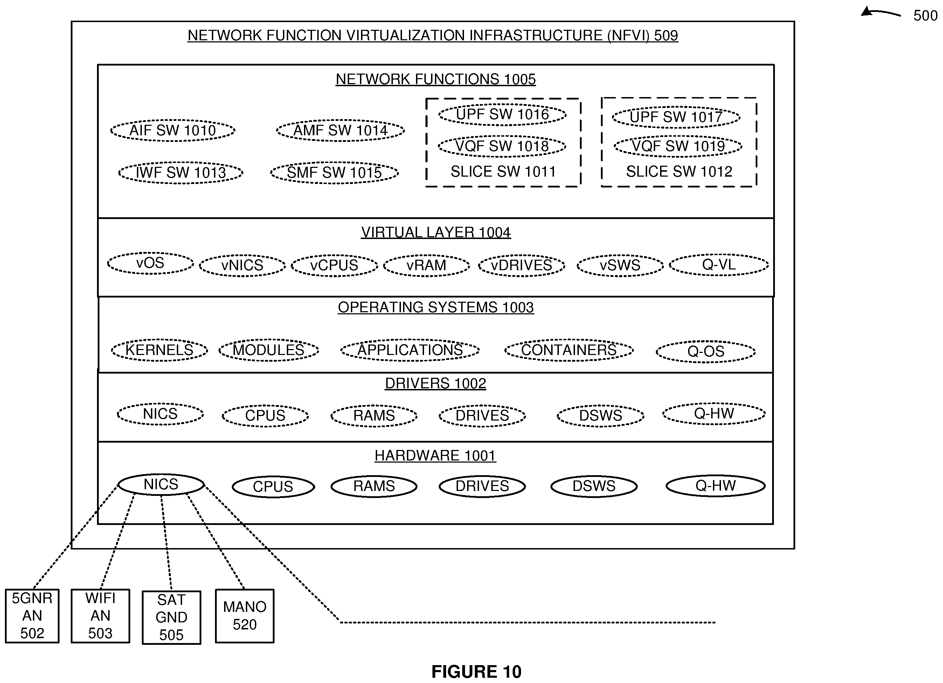

Figure 10 illustrates an exemplary Network Function Virtualization Infrastructure (NFVI) 509 in wireless communication network 500 that orchestrates VQFs 518-519 into wireless network slices 511-512. NFVI 509 comprises an example of data communication system 100, slices 111-112, and processing circuitry 400, although system 100, slices 111-112, and circuitry 400 may differ. NFVI 509 comprises hardware 1001, hardware drivers 1002, operating systems 1003, virtual layer 1004, and SW 1005. Hardware 1001 comprises Network Interface Cards (NICs), CPU, RAM, Flash/Disk Drives (DRIVE), Data Switches (DSW), and quantum components (Q-HW). Hardware drivers 1002 comprise software that is resident in the NIC, CPU, RAM, DRIVE, DSW, and Q-HW. Operating systems 1003 comprise kernels, modules, applications, containers, and quantum systems (Q-OS). Virtual layer 1004 comprises vNIC, vCPU, vRAM, vDRIVE, vSW, and QUANTUM Virtual Layer (Q-VL). SW 1005 comprises IWF SW 1013, AMF SW 1014, SMF SW 1015, and slice SW 1011-1012. Slice SW 1011 comprises UPF SW 1016 and VQF SW 1018. Slice SW 1012 comprises UPF SW 1017 and VQF SW 1019. The NIC in hardware 1001 are coupled to 5GNR AN 502, WIFI AN 503, GND 505, MANO 520, and external systems. The Q-HW in hardware 1001 is coupled to external quantum systems. Hardware 1001 executes hardware drivers 1002, operating systems 1003, virtual layer 1004, and SW 1005 to form and operate IWF 513, AMF 514, SMF 515, slice 511 including UPF 516 and VQF 518, and slice 512 including UPF 517 and VQF 519. NFVI 509 comprises one or more microprocessors and one or more non-transitory machine-readable storage media that store processing instructions that direct NFVI 509 to perform the methods described herein. For example, AIF SW 1010 may transfer an API call to NFVO 521 to orchestrate VQF SW 1018 into slice 511 and connect VQF SW 1018 to UPF SW 1016. NFVI 509 may be located at a single site or be distributed across multiple geographic locations.

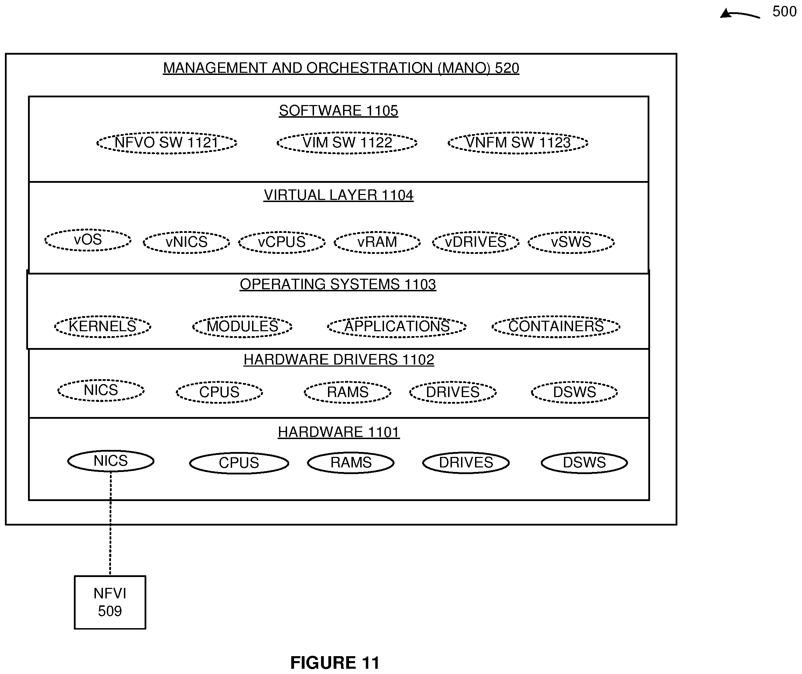

Figure 11 illustrates exemplary Management and Orchestration (MANO) 520 in wireless communication network 500 that orchestrates VQFs 518-519 into wireless network slices 511-512. MANO 520 comprises an example of network controller 110 and processing circuitry 400, although controller 110 and circuitry 400 may differ. MANO 520 comprises hardware 1101, hardware drivers 1102, operating systems 1103, virtual layer 1104, and Software (SW) 1105. Hardware 1101 comprises Network Interface Cards (NICs), CPU, RAM, Flash/Disk Drives (DRIVE), and Data Switches (DSW). Hardware drivers 1102 comprise software that is resident in the NIC, CPU, RAM, DRIVE, and DSW. Operating systems 1103 comprise kernels, modules, applications, and containers. Virtual layer 1104 comprises vNIC, vCPU, vRAM, vDRIVE, and vSW. SW 1105 comprises NFVO SW 1121, VIM SW 1122, and VNFM SW 1123. The NIC in NF hardware 1101 are coupled to NFVI 509. Hardware 1101 executes hardware drivers 1102, operating systems 1103, virtual layer 1104, and SW 1105 to form and operate NFVO 521, VIM 522, and VNFM 523. For example, NFVO SW 1121 may orchestrate VQF SW 1018 into slice 511 and connect VQF SW 1018 to UPF SW 1016 in response to an API call from AIF SW 1010. Thus, MANO 520 comprises one or more microprocessors and one or more non-transitory machine-readable storage media that store processing instructions that direct MANO 520 to perform the methods described herein. MANO 520 may be located at a single site or be distributed across multiple geographic locations.

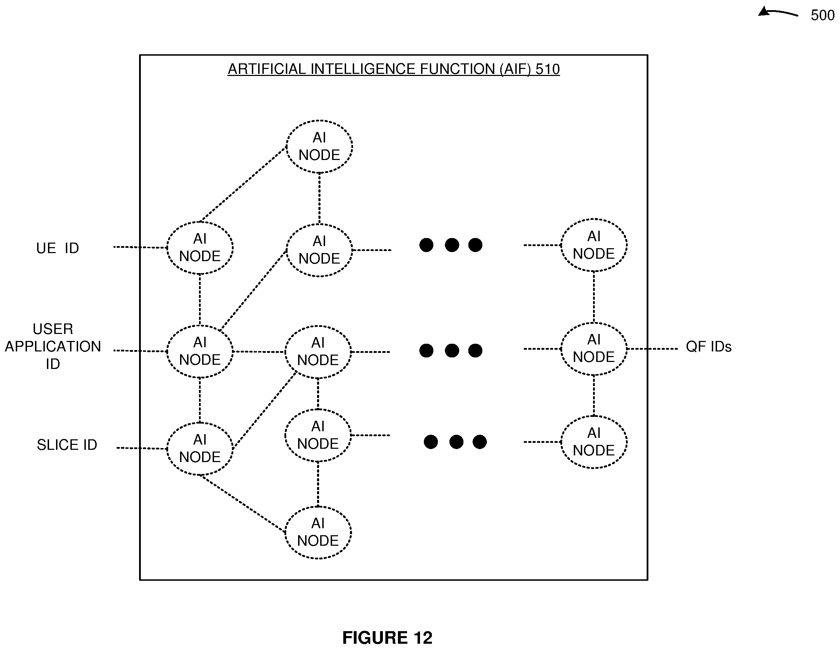

Figure 12 illustrates exemplary Artificial Intelligence Function (AIF) 510 in wireless communication network 500 that orchestrates VQFs 518-519 into wireless network slices 511-512. AIF 510 comprises an example of network controller 110 and processing circuitry 400, although controller 110 and circuitry 400 may differ. AIF 510 implements brain-like intelligence in computer and communication circuitry. AIF 510 comprises a neural network that has AI nodes that are connected by AI edges. The AI nodes mimic brain neurons by processing data inputs based on training data to produce weighted data outputs. AIF 510 processes data inputs like a UE ID, user application ID, and slice ID to generate data outputs like VQF IDs that identify the VQFs that will serve the identified user application in the identified UE over the identified slice.

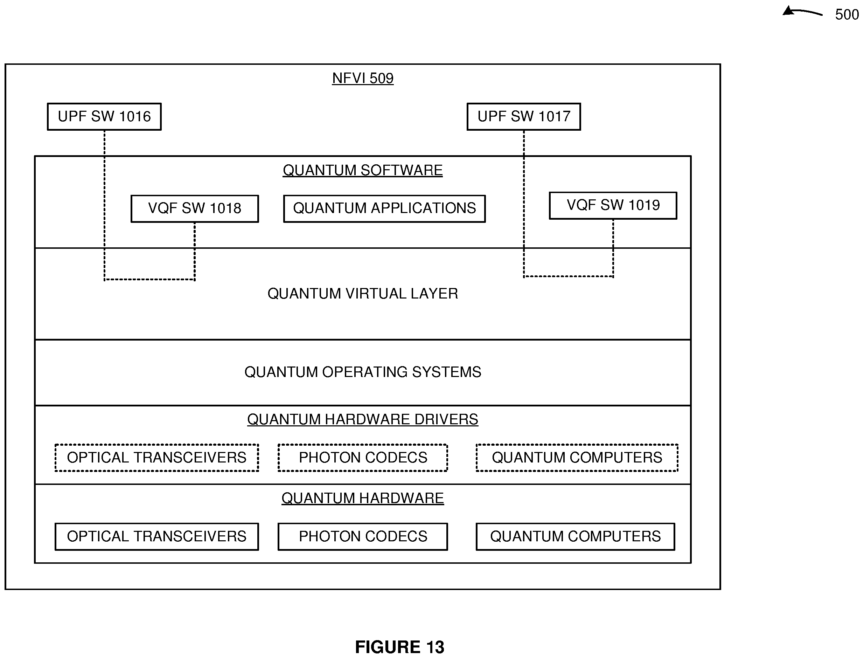

Figure 13 illustrates exemplary quantum components in Network Function Virtualization Infrastructure (NFVI) 509 in wireless communication network 500 that orchestrates VQFs 518-519 into wireless network slices 511-512. NFVI 509 comprises quantum hardware, quantum hardware drivers, quantum operating systems, quantum virtual layer, and quantum software. The quantum hardware comprises optical transceivers, photon coder/decoders (CODECs), and quantum computers. The quantum hardware drivers comprise driver software resident in the optical transceivers, photon coder/decoders, and quantum computers. The quantum operating systems interface with the quantum hardware drivers to control the quantum hardware. The quantum virtual layer comprises Virtual Quantum (VQ) NICs, VQ-CPUs, VQ-RAM, VQ-DRIVEs, and VQ-DSWs. The quantum software comprises VQF SW 1018-1019 and additional quantum applications that run in the quantum computers. The quantum computers execute the quantum hardware drivers, quantum operating systems, quantum virtual layer, and quantum applications to provide a hosted quantum computing service to VQF SW 1019. The optical transceivers and photon coders/decoders along with their quantum drivers, quantum operating systems, and quantum virtual layer provide quantum key distribution, quantum cryptography, and quantum intercept detection to VQF 1018.

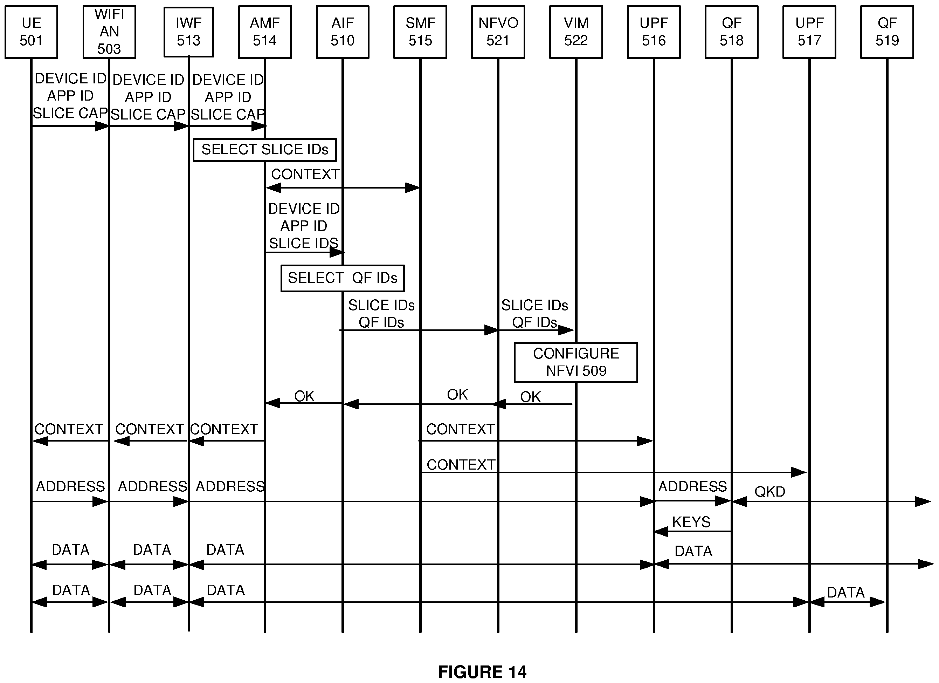

Figure 14 illustrates an exemplary operation of wireless communication network 500 to orchestrate VQFs 518-519 into wireless network slices 511-512. The operation may differ in other examples. UE 501 transfers a device ID, user application ID, and slice capabilities (CAP) to AMF 514 over WIFI AN 503 and IWF 513. The device ID is for UE 501. The user application ID is for quantum user application 605 in UE 501. The slice capabilities describe slice features that are suitable for UE 501 and quantum user application 605. AMF 514 selects slice IDs for slices 511-512 based on these slice capabilities. Slice 511 is selected to provide secure data exchange over the internet. Slice 512 is selected to provide hosting computing. AMF 514 interacts with SMF 515 to develop context that includes the selection of UPF 516 for slice 511 and the selection of UPF 517 for slice 512.

AMF 514 transfers the device ID, quantum user application ID, and slice IDs (including UPF IDs) to AIF 510. AIF 510 selects VQF 518 to provide quantum Key Distribution (QKD) for UE 501 over slice 511. AIF 510 selects VQF 519 to provide hosted quantum computing for quantum user application 605 over slice 512. AIF 510 calls an Application Programming Interface (API) on NFVO 521 to instantiate VQF 518 into slice 511 and to instantiate VQF 519 into slice 512. The instantiation includes the connection of UPF 516 to VQF 518 and the connection of UPF 517 to VQF 519. NFVO 522 directs VIM 522 to instantiate VQF 518 for slice 511 and to instantiate VQF 519 for slice 512. VIM 522 configures NFVI 509 to execute VQF 518 and connect VQF 518 to UPF 516 for slice 511. VIM 522 configures NFVI 509 to execute VQF 519 and connect VQF 519 to UPF 517 for slice 512. VIM 522 indicates to NFVO 521 that VQFs 518-519 are ready. NFVO 521 indicates to AIF 510 that VQFs 518-519 are ready. AIF 510 indicates to AMF 514 that VQFs 518-519 are ready for slices 511-512. AMF 514 transfers context for slices 511-512 to IWF 513. AMF 514 transfers context for slices 511-512 to UE 501 over IWF 513 and WIFI AN 503. SMF 515 transfers context for slice 511 to UPF 516 and transfers context for slice 512 to UPF 517.

UE 501 transfers a destination address for secure internet communications to VQF 518 over WIFI AN 503, IWF 513, and UPF 516. VQF 518 exchanges qubits with the destination to establish cryptography keys. VQF 518 indicates the cryptography keys to UPF 516. UE 501 exchanges user data with the destination over WIFI AN 503, IWF 513, and UPF 516. UPF 516 uses the cryptography keys to encrypt/decrypt the user data exchanged with the destination over the internet.

UE 501 executes quantum user application 605 (not shown). Quantum user application 605 exchanges user data with VQF 519 over WIFI AN 503, IWF 513, and UPF 517. VQF 519 delivers a hosted quantum computing service to quantum user application 605 over this data exchange. For example, quantum user application 605 in UE 501 submits quantum computing tasks to VQF 519 which performs the tasks and transfers the quantum computing results to quantum user application 605 in UE 501.

The wireless communication system circuitry described above comprises computer hardware and software that form special-purpose data communication circuitry system to deliver quantum capabilities over network slices. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose data communication circuitry system to deliver quantum capabilities over network slices.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents.

## Claims

1. A method to deliver quantum capabilities over network slices, the method comprising:
receiving a user application characteristic from a user communication device for a user application in the user communication device;
selecting one of the quantum capabilities based on the user application characteristic; and
connecting the user communication device to the selected one of the quantum capabilities over one of the network slices.

2. The method of claim 1 wherein selecting the one of the quantum capabilities based on the user application characteristic comprises selecting the one of the quantum capabilities based on a quantum functionality of the user application.

3. The method of claim 1 wherein selecting the one of the quantum capabilities based on the user application characteristic comprises selecting the one of the quantum capabilities based on a quantum functionality of the user communication device.

4. The method of claim 1 wherein the one of the quantum capabilities comprises quantum key distribution.

5. The method of claim 1 wherein the one of the quantum capabilities comprises quantum cryptography.

6. The method of claim 1 wherein the one of the quantum capabilities comprises hosted quantum computing.

7. The method of claim 1 wherein the one of the quantum capabilities comprises one of quantum intercept detection, quantum sensing, and quantum data communications.

8. The method of claim 1 further comprising orchestrating the selected one of the quantum capabilities into the one of the network slices.

9. A data communication system to deliver quantum capabilities over network slices, the data communication system comprising:
a network controller to select one of the network slices;
the network controller to indicate the selected one of the network slices and a user application characteristic to an Artificial Intelligence, AI, network;
the network controller to receive an indication of a selected one of the quantum capabilities from the AI network;
the network controller to instantiate the selected one of the quantum capabilities into the selected one of the network slices; and
the selected one of the network slices to connect the user communication device to the selected one of the quantum capabilities.

10. The data communication system of claim 9 wherein the network controller comprises:
a network orchestrator to receive an API call from the AI network that indicates the selected one of the quantum capabilities to receive the indication of the selected one of the quantum capabilities from the AI network; and
the network orchestrator to instantiate the selected one of the quantum capabilities into the selected one of the network slices in response to the API call to instantiate the selected one of the quantum capabilities into the selected one of the network slices.

11. The data communication system of claim 9 wherein the network controller comprises:
a network function to receive the indication of the selected one of the quantum capabilities from the AI network to receive the indication of a selected one of the quantum capabilities from the AI network;
the network function to transfer an API call that indicates the selected one of the network slices and the selected one of the quantum capabilities to a network orchestrator; and
the network orchestrator to instantiate the selected one of the quantum capabilities into the selected one of the network slices in response to the API call to instantiate the selected one of the quantum capabilities into the selected one of the network slices.

12. The data communication system of claim 9 wherein:
the data communication system comprises a wireless communication network;
the user communication device comprises a wireless User Equipment, UE;
the network slices comprise wireless network slices; and
the network controller comprises a wireless network function and a wireless network orchestrator.

13. The data communication system of claim 9 wherein the selected one of the network slices comprises a Virtual Network Function, VNF, in a Network Function Virtualization Infrastructure, NFVI.

14. The data communication system of claim 9 wherein the selected one of the quantum capabilities comprises a Virtual Quantum Function, VQF, in a Network Function Virtualization Infrastructure, NFVI.

15. The data communication system of claim 9 wherein the selected one of the quantum capabilities comprises one of quantum key distribution, quantum cryptography, hosted quantum computing, quantum intercept detection, quantum sensing, and quantum data communications.
